# EUROPÄISCHE PATENTANMELDUNG

(11) **EP 1 587 133 A2**
(43) Veröffentlichungstag der Anmeldung: **19.10.2005**
(21) Anmeldenummer: 05002310.0
(22) Anmeldetag: 03.02.2005
(51) Int. Cl.: H01J 65/04, H01J 61/067, H01J 61/92, H01J 61/78, H01J 61/30

(54) **Dielektrische Barriere-Entladungslampe**

(30) Priorität: 23.02.2004 DE 102004008747
(71) Anmelder: Patent-Treuhand-Gesellschaft für elektrische Glühlampen mbH, 81543 München (DE)
(72) Erfinder: Döll, Gerhard, Dr., 510515 Guangzhou (CN)

(57) **Zusammenfassung**

Bei der erfindungsgemäßen dielektrischen Barriere-Entladungslampen sind die länglichen, z.B. streifen- oder linienförmigen Elektroden in Längsrichtung jeweils durch eine Lücke (16) in zwei Teilelektroden (14a,14b;15a,15b) getrennt. Dadurch wird gezielt die Möglichkeit eröffnet, den einen Teil (14a,15a) der Teilelektroden separat von dem anderen Teil (14b,15b) betreiben zu können und folglich entweder nur einen Teil der Lampe zum Leuchten zu bringen oder die gesamte Lampe. Dazu ist der eine Teil (14a,15a) der Teilelektroden mit einem ersten Betriebsgerät (22) verbunden, der andere Teil (14b,15b) mit einem zweiten Betriebsgerät (21).

## Beschreibung

### Technisches Gebiet

Die Erfindung geht aus von einer dielektrischen Barriere-Entladungslampe.

Bei dieser Art von Lampen sind die Elektroden durch ein Dielektrikum von dem im Innern des Entladungsgefäßes befindlichen Entladungsmedium getrennt. Dabei können prinzipiell die Elektroden entweder alle innerhalb, alle außerhalb oder die Elektrode(n) einer Polarität innerhalb und die andere(n) außerhalb des Entladungsgefäßes sein. Für außerhalb des Entladungsgefäßes angeordnete Elektroden - im Folgenden auch als Außenelektroden bezeichnet - wirkt die Wand des Entladungsgefäßes als dielektrische Barriere. Falls alle Elektroden innerhalb des Entladungsgefäßes angeordnet sind - im Folgenden auch als Innenelektroden bezeichnet -, muss allerdings zumindest eine Elektrode bzw. die Elektroden einer Polarität durch ein Dielektrikum, beispielsweise durch eine dielektrische Beschichtung, vom Innern des Entladungsgefäßes getrennt sein. Durch diese dielektrische Barriere entsteht im Betrieb eine sogenannte einseitig dielektrisch behinderte Entladung. Alternativ können auch sämtliche Elektroden mit einer dielektrischen Barriere versehen sein. Dann handelt es sich um eine beidseitig dielektrisch behinderte Entladung. Letzteres trifft insbesondere auch auf den Fall zu, dass sämtliche Elektroden außerhalb des Entladungsgefäßes angeordnet sind.

Die Erfindung betrifft insbesondere dielektrische Barriere-Entladungslampen mit rohrförmigem Entladungsgefäß. Derartige Lampen werden beispielsweise in Belichtungseinheiten für Kopierer, Scanner, Faxgeräten und ähnlichen Geräten der Büroautomation, sogenannten OA-Geräten (OA = Office Automation), eingesetzt. Denkbar sind aber auch andere Einsatzbereiche, bspw. in der Automobiltechnik, z.B. als Blink- oder Stopplicht und für die Innenbeleuchtung, sowie für die Allgemeinbeleuchtung.

### Stand der Technik

In der Schrift US-A 2002/0163306 ist eine rohrförmige Barriere-Entladungslampe mit linienförmigen Innenelektroden offenbart. Die Innenelektroden erstrecken sich längs der gesamten Innenwand des Entladungsrohrs und sind an einem Ende gasdicht nach Außen geführt. Dazu ist das Entladungsrohr an dem Ende der Elektrodendurchführungen mit Hilfe eines tellerförmigen Verschlusselements gasdicht verschlossen. Zu diesem Zweck wird das Entladungsrohr an diesem Ende mit einer Verengung versehen, die den Rand des tellerförmigen Verschlusselements ringförmig umschließt. Danach werden die Verengung und das tellerförmige Verschlusselement gasdicht miteinander verschmolzen, wobei die Innenelektroden durch diese Verschmelzung hindurch nach außen geführt sind.

In vielen Anwendungen werden derartige Lampen unterschiedlicher Länge benötigt, z.B. für unterschiedlich große Scannerflächen. Beispielsweise gibt es Geräte, die für Dokumente bis zur Größe A3 geeignet sind, aber auch andere, die bis A2 oder gar bis A0 geeignet sind. Hierfür sind jeweils verschiedene entsprechend lange Lampen erforderlich. Um nun für unterschiedlich lange Lampen die gleiche Beleuchtungsstärke zu gewährleisten, ist für jede Lampenlänge ein entsprechend angepasstes Betriebsgerät erforderlich. Es hat sich nämlich gezeigt, dass sich die Beleuchtungsstärke ungefähr halbiert, wenn man eine Lampe mit ca. 650 mm Länge mit dem gleichen Betriebsgerät betreibt, das für eine Lampe mit ca. 350 mm Länge ausgelegt ist.

### Darstellung der Erfindung

Die Aufgabe der vorliegenden Erfindung ist es, eine dielektrische Barriere-Entladungslampen mit flexiblen Einsatzmöglichkeiten bereit zu stellen. Ein weiterer Aspekt ist, Beleuchtungsaufgaben, die unterschiedlich ausgedehnte Beleuchtungsflächen bei im wesentlichen konstanter Beleuchtungsstärke betreffen, mit nur einer Leistungsklasse von Betriebsgeräten für eine derartige dielektrische Barriere-Entladungslampe zu lösen.

Diese Aufgabe wird gelöst durch eine Dielektrische Barriere-Entladungslampe mit einem Entladungsgefäß, das einen mit einem Entladungsmedium gefüllten Entladungsraum umschließt und länglichen Elektroden, die sich im wesentlichen entlang der gesamten Länge einer Längsausdehnung des Entladungsraums erstrecken, dadurch gekennzeichnet, dass jede Elektrode in ihrer Längsrichtung in zwei Teilelektroden unterteilt ist.

Besonders vorteilhafte Ausgestaltungen finden sich in den abhängigen Ansprüchen.

Außerdem wird Schutz für den Betrieb der erfindungsgemäßen Lampe sowie ein Beleuchtungssystem mit der erfindungsgemäßen Lampe beansprucht.

Die Erfindung sieht vor, die bei den gattungsgemäßen dielektrischen Barriere-Entladungslampen verwendeten länglichen, z.B. streifen- oder linienförmigen Elektroden in Längsrichtung jeweils in zwei Teilelektroden zu trennen. Dadurch wird gezielt die Möglichkeit eröffnet, den einen Teil der Teilelektroden separat von dem anderen Teil betreiben zu können und folglich entweder nur einen Teil der Lampe, den komplementären Teil oder auch die gesamte Lampe zum Leuchten zu bringen.

Bevorzugt sind die länglichen Elektroden so unterteilt, dass jeweils die beiden Teilelektroden gleich lang sind. Dies hat nämlich den Vorteil, dass zwei gleiche Betriebsgeräte zum Betrieb der beiden gleichen Lampenhälften verwendet werden können, wobei sich mit den beiden Hälften jeweils die gleiche Beleuchtstärke realisieren lässt. Damit ist es z.B. möglich, in einem Scanner beim Belichten eines kleinen Dokumentenformats nur eine Hälfte der für diesen Zweck vorzugsweise rohrförmigen Lampe einzuschalten. Bei größeren Formaten wird hingegen auch die zweite Hälfte eingeschaltet. In beiden Fällen ist die Beleuchtungsstärke auf den unterschiedlich großen Dokumenten wie gewünscht gleich groß.

Grundvoraussetzung für das getrennte und voneinander unabhängige Betreiben der beiden Teile der Teilelektroden ist natürlich, dass jeweils die beiden Teilelektroden gegeneinander elektrisch isoliert sind. Dann wird ein erster Teil der Teilelektroden mit einem ersten Betriebsgerät verbunden, und der zweite Teil der Teilelektroden mit einem zweiten Betriebsgerät. Für nähere Erläuterungen hierzu wird auf das zweite Ausführungsbeispiel verwiesen.

In einer bevorzugten Ausführung der Erfindung weist die dielektrische Barriere-Entladungslampe ein rohrförmiges Entladungsgefäß auf, wobei die Teilelektroden parallel zur Längsachse des Entladungsgefäßes orientiert sind. Die jeweiligen beiden korrespondierenden Teilelektroden sind zumindest für den Fall von auf der Innenseite der Wand des Entladungsgefäßes angeordneten Elektroden vorzugsweise kolinear. Das hat nämlich den Vorteil, dass jeweils die beiden korrespondierenden Teilelektroden mit einer gemeinsamen durchgängigen Bahn aus dielektrischem Material, z.B. Glas, abgedeckt werden können. Jedenfalls sind jeweils die beiden korrespondierenden Teilelektroden durch eine Lücke voneinander getrennt, wobei die Länge der Lücke typischerweise im Bereich zwischen ca. 0,5 und 3 mm, vorzugsweise zwischen ca. 0,5 und 2 mm, besonders bevorzugt zwischen ca. 0,5 und 1,5 mm liegt. Dabei ist zu berücksichtigen, dass die Lücke einerseits groß genug sein muss, um eine vollständige elektrische Entkopplung beider Teilelektroden zu gewährleisten. Andererseits sollte die Lücke nicht zu groß sein, da dort keine Entladung vorgesehen ist und deshalb dieser Bereich der Lampe nicht leuchtet oder zumindest deutlich dunkler ist.

### Kurze Beschreibung der Zeichnungen

Im Folgenden soll die Erfindung anhand von Ausführungsbeispielen näher erläutert werden. Die Figuren zeigen:
- Fig. 1a: einen Längsschnitt einer erfindungsgemäßen dielektrischen Barriere-Entladungslampe mit Innenelektroden,
- Fig. 1b: einen Querschnitt der Lampe aus Fig. 1a entlang der Linie AA,
- Fig. 1c: einen Querschnitt der Lampe aus Fig. 1a entlang der Linie BB,
- Fig. 2a: eine Draufsicht eines erfindungsgemäßen Beleuchtungssystems mit einer dielektrischen Barriere-Entladungslampe mit Außenelektroden,
- Fig. 2b: eine zu Fig. 2a um 90° gedrehte zweite Draufsicht der Lampe,
- Fig. 2c: einen Querschnitt der Lampe aus Fig. 2a entlang der Linie CC.

### Bevorzugte Ausführung der Erfindung

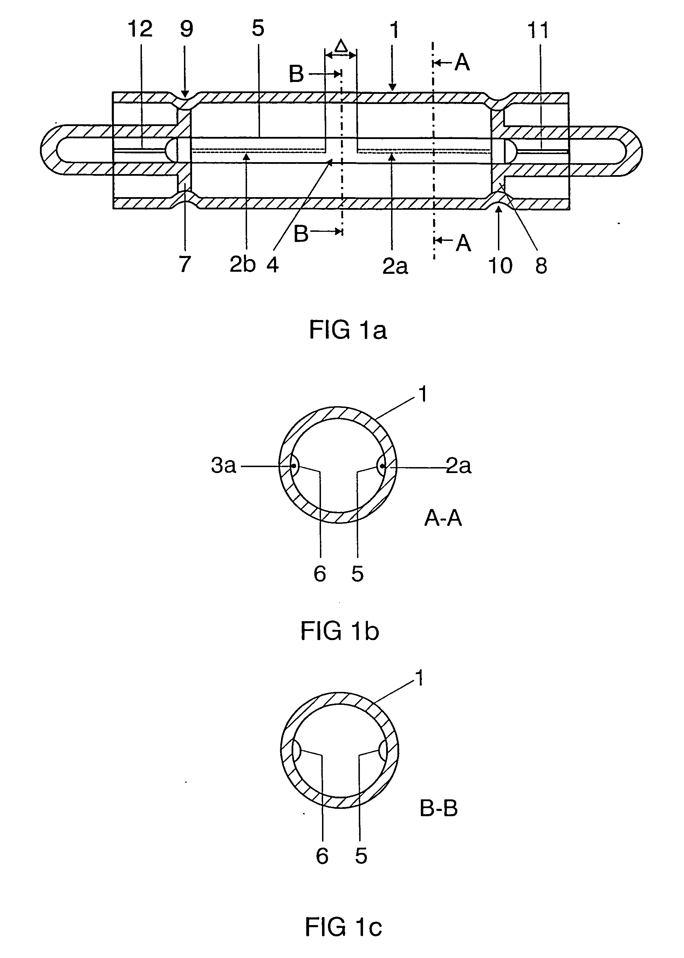

Die Figuren 1a bis 1c zeigen einen Längsschnitt, einen Querschnitt entlang der Linie AA sowie einen Querschnitt entlang der Linie BB einer erfindungsgemäßen dielektrischen Barriere-Entladungslampe. Sie weist ein rohrförmiges Entladungsgefäß 1 auf sowie insgesamt vier linienartige Teilelektroden 2a, 2b und 3a, 3b. Jeweils zwei Teilelektroden 2a, 2b bzw. 3a, 3b sind in Form von ca. 1 mm breiten Bahnen aus Silber kolinear und parallel zur Längsachse des rohrförmiges Entladungsgefäß 1 orientiert auf der Innenseite der Wand des Entladungsgefäßes 1 aufgebracht. Dabei sind die beiden Hälften kolinearer Teilelektroden zueinander diametral angeordnet. Die kolinearen Teilelektroden sind durch je eine Lücke 4 (die zweite Lücke ist in den Figuren nicht erkennbar) deren longitudinale Ausdehnung Δ ca. 1 mm beträgt, getrennt. Dadurch ist es möglich, die diametralen Teilelektrodenpaare 2a, 3a bzw. 2b, 3b getrennt zu betreiben, d.h. nur eine der beiden Hälften der Lampe zum Leuchten zu bringen oder aber auch beide Hälften gleichzeitig. Die kolinearen Teilelektroden 2a, 2b bzw. 3a, 3b sind außerdem jeweils mit einer als dielektrische Barriere wirkenden streifenförmigen Glasschicht 5, 6 bedeckt, wobei die beiden Lücken 4, die jeweils die beiden kolinearen Teilelektroden 2a, 2b bzw. 3a, 3b voneinander trennen, ebenfalls eingeschossen sind (siehe Fig. 1c). Die beiden Enden des rohrförmigen Entladungsgefäßes 1 sind jeweils mit einem tellerförmigen Verschlusselement 7, 8 verbindungsmittelfrei gasdicht verschlossen. Zu diesem Zweck weist das Entladungsgefäß 1 an jedem Ende eine Verengung 9, 10 auf, die den Rand des jeweiligen tellerförmigen Verschlusselements 7, 8 ringförmig umschließt und verschmolzen ist. Die Teilelektroden 2a, 3a bzw. 2b, 3b sind durch die Verschmelzung hindurch nach außen geführt und dienen dort als Stromzuführungen 11, 12 (im Längsschnitt der Fig. 1a ist jeweils nur eine Stromzuführung pro Elektrodenpaar erkennbar). Für weitere Details zur Verschlusstechnik des rohrförmigen Entladungsgefäßes mit dielektrisch behinderten Innenelektroden wird auf die bereits erwähnte US-A 2002/0163306 verwiesen. Das so verschlossene Entladungsgefäß 1 enthält als Entladungsmedium ca. 15 kPa Xenon. Je nach Einsatzzweck, z.B. für OA-Anwendungen, kann außerdem die Innenseite der Wand des Entladungsgefäßes zumindest teilweise mit Leuchtstoff versehen sein (nicht dargestellt), der die vom Entladungsmedium im Betrieb erzeugte UV-Strahlung in sichtbares Licht konvertiert.

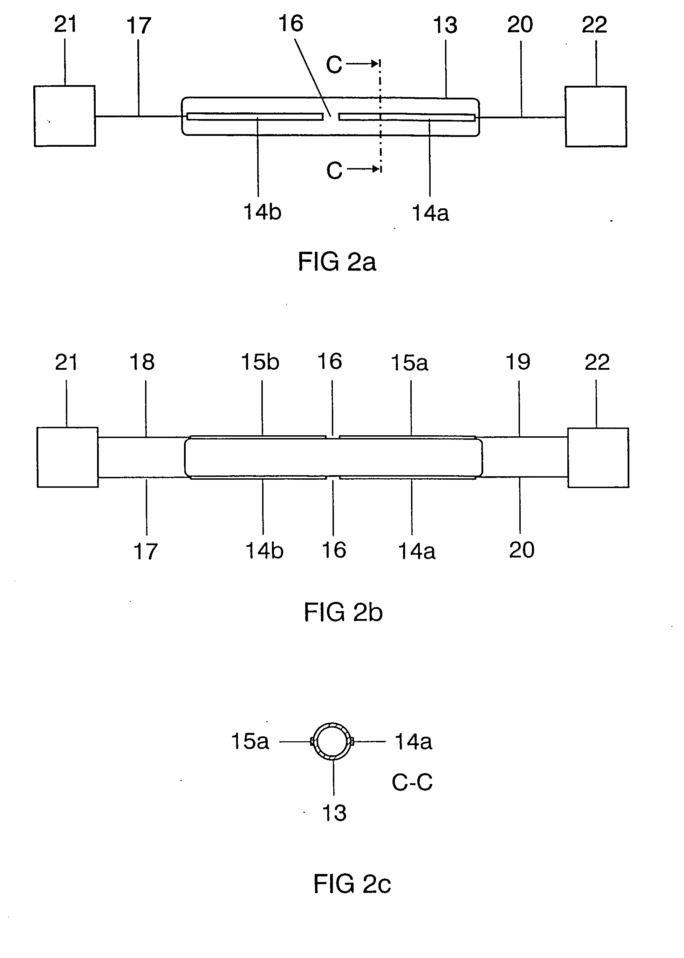

In den Figuren 2a, 2b, 2c sind eine erste Draufsicht, eine dazu um 90° gedrehte zweite Draufsicht sowie ein Querschnitt entlang der Linie CC eines weiteren Ausführungsbeispiels schematisch dargestellt. Hier handelt es sich um ein komplettes Beleuchtungssystem mit einer rohrförmigen dielektrischen Barriere-Entladungslampe, letztere allerdings - im Unterschied zum vorherigen Ausführungsbeispiel - mit Außenelektroden. Dazu sind auf der Außenseite des rohrförmigen Entladungsgefäßes 13 vier streifenförmige Teilelektroden 14a, 14b, 15a, 15b (in Fig. 2a sind die Teilelektroden 15a, 15b nicht erkennbar) aufgebracht. Die Anordnung der Teilelektroden 14a, 14b, 15a, 15b einschließlich der beiden Lücken 16 (in Fig. 2a ist die zweite Lücke verdeckt) entspricht derjenigen des ersten Ausführungsbeispiels. Darüber hinaus ist jedes Teilelektrodenpaar 14a, 15a bzw. 14b, 15b über je zwei zugehörige Zuleitungen 19, 20 bzw. 17, 18 (in Fig. 2a ist jeweils die zweite Zuleitung 18, 19 nicht erkennbar) mit je einem zugehörigen Betriebsgerät 22, 21 verbunden.

Obwohl die Erfindung am Beispiel einer rohrförmigen dielektrischen Barriere-Entladungslampe näher erläutert wurde, ist sie gleichwohl nicht auf diese Lampenform beschränkt. Vielmehr entfaltet die Erfindung ihre vorteilhafte Wirkung auch bei anderen Lampenformen, insbesondere auch bei flachen. Bei flachen dielektrischen Barriere-Entladungslampen sind die Elektroden jeder Polarität üblicherweise als Kammstruktur ausgebildet. Erfindungsgemäß kommen also vier solcher Kammstrukturen zum Einsatz, wobei je zwei "Kamm-Elektroden" zu einem Elektrodenpaar zusammengefasst sind. Jedes der beiden "Kamm-Elektrodenpaare" erstreckt sich über einen komplementären Teil der flachen dielektrischen Barriere-Entladungslampe. Die beiden Kammstrukturen jedes Kamm-Elektrodenpaares können dabei auf einer gemeinsamen Lampengefäßplatte ineinandergreifend angeordnet sein, oder einander entgegengesetzt auf zwei gegenüberliegenden Lampengefäßplatten.

## Patentansprüche

1. Dielektrische Barriere-Entladungslampe mit einem Entladungsgefäß (1, 13), das einen mit einem Entladungsmedium gefüllten Entladungsraum umschließt und länglichen Elektroden, die sich im wesentlichen entlang der gesamten Länge einer Längsausdehnung des Entladungsraums erstrecken, **dadurch gekennzeichnet, dass** jede Elektrode in ihrer Längsrichtung in zwei Teilelektroden (2a, 2b; 3a, 3b 14a, 14b; 15a, 15b) unterteilt ist.

2. Dielektrische Barriere-Entladungslampe nach Anspruch 1, wobei jeweils die beiden Teilelektroden (2a, 2b; 3a, 3b 14a, 14b; 15a, 15b) gleich lang sind.

3. Dielektrische Barriere-Entladungslampe nach Anspruch 1 oder 2, wobei jeweils die beiden Teilelektroden (2a, 2b; 14a, 14b; 15a, 15b) gegeneinander elektrisch isoliert sind.

4. Dielektrische Barriere-Entladungslampe nach einem der vorstehenden Ansprüche, wobei das Entladungsgefäß (1) rohrförmig und die Teilelektroden (2a, 2b; 3a, 3b 14a, 14b; 15a, 15b) parallel zur Längsachse des Entladungsgefäßes (1) orientiert sind.

5. Dielektrische Barriere-Entladungslampe nach einem der vorstehenden Ansprüche, wobei jeweils die beiden korrespondierenden Teilelektroden (2a, 2b; 3a, 3b 14a, 14b; 15a, 15b) kolinear sind.

6. Dielektrische Barriere-Entladungslampe nach Anspruch 5, wobei jeweils zwei korrespondierende Teilelektroden (2a, 2b; 3a, 3b 14a, 14b; 15a, 15b) durch eine Lücke (4; 16) voneinander getrennt sind

7. Dielektrische Barriere-Entladungslampe nach Anspruch 6, wobei die longitudinale Ausdehnung der Lücke (4; 16) im Bereich zwischen ca. 0,5 und 3 mm liegt.

8. Dielektrische Barriere-Entladungslampe nach einem der Ansprüche 5 bis 7, wobei die Elektroden (2a, 2b, 3a, 3b) auf der Innenseite der Wand des Entladungsgefäßes (1) angeordnet sind und jeweils die beiden korrespondierenden Teilelektroden (2a, 2b; 3a, 3b) mit einer gemeinsamen Dielektrikumsschicht (5; 6) bedeckt sind.

9. Verfahren zum Betreiben einer dielektrischen Barriere-Entladungslampe mit den Merkmalen eines der vorstehenden Ansprüche, wobei die beiden Teile der Teilelektroden voneinander getrennt und unabhängig elektrisch betrieben werden.

10. Beleuchtungssystem zur Durchführung des Verfahrens nach Anspruch 9, wobei ein erster Teil der Teilelektroden (14a, 15a) mit einem ersten Betriebsgerät (22) verbunden ist und der zweite Teil (14b, 15b) der Teilelektroden mit einem zweiten Betriebsgerät (21) verbunden ist.
